# DEMANDE DE BREVET EUROPEEN

(11) **EP 0 756 390 A1**
(43) Date de publication de la demande: **29.01.1997**
(21) Numéro de dépôt: 96401630.7
(22) Date de dépôt: 22.07.1996
(51) Int. Cl.: H04B 7/005

(54) **Procédé de régulation de puissance dans un réseau de télécommunications**

(30) Priorité: 25.07.1995 FR 9509007
(71) Demandeur: ALCATEL ESPACE, F-92737 Nanterre Cédex (FR)
(72) Inventeur: Calot, Guillaume, 78000 Versailles (FR); Feniou, Alain, 92400 Courbevoie (FR); Michel, Cyril, 75013 Paris (FR); Rouffet, Denis, 92100 Boulogne Billancourt (FR)
(74) Mandataire: Pothet, Jean Rémy Emile Ludovic

(57) **Abrégé**

L'invention fournit un procédé de régulation d'une puissance d'un premier signal qui est émis par une première station (S1) pour être reçu sous la forme d'un second signal par une seconde station (S2). Le procédé comprend les étapes de :
- prédiction (15), à un instant donné, en fonction dudit second signal est reçu par la seconde station, d'une valeur représentative d'un rapport signal à bruit (C/N(t3)) dans ledit second signal à un instant ultérieur, et
- régulation (17), dans ladite première station (S1), à un instant intermédiaire succédant à l'instant donné, et précédant ledit instant ultérieur (t3) d'une durée sensiblement égale à la durée de propagation entre première (S1) et seconde (S2) stations, de ladite puissance du premier signal en fonction de ladite valeur prédite (C/N(t3)).

## Description

La présente invention concerne de manière générale un réseau de radiocommunications par satellite ou terrestre. Plus précisément, l'invention a trait à un procédé de régulation d'une puissance d'un premier signal émis par une station émettrice, dite première station, à destination d'une station réceptrice, dite seconde station.

Le canal de radiocommunication établi entre ces deux stations impose, en réception par la station réceptrice, des variations de la puissance utile et de la puissance de bruit. La variation de la puissance utile est due aux caractéristiques du canal. Elle résulte par exemple d'évanouissements dus à la présence d'obstacles, ou de la présence de trajets multiples s'ajoutant de manière incohérente à la composante principale du signal émis. La variation de la puissance de bruit résulte pour sa part, au même titre que le signal utile, des caractéristiques du canal. Elle peut résulter également de la variation de puissance de la source d'émission de bruit.

Si aucune solution n'est apportée pour remédier à ce problème de variation des composantes du signal reçu, il en résulte une détérioration de la qualité de la liaison établie à travers le canal.

Une solution simple consiste à tenir compte a priori des fluctuations maximales pouvant s'appliquer au signal reçu. La station émettrice émet alors avec une marge de puissance offrant une garantie de la qualité de la liaison quelque soit l'environnement de propagation et d'interférences associé au canal. Cette solution conduit alors à un surdimensionnement du système de transmission, à une perte de capacité, et à un surdimensionnement de la puissance émise par les terminaux.

Dans le cadre des réseaux mobiles terrestres, les fluctuations des composantes de signal et de bruit dans le canal sont importantes, en pouvant atteindre plusieurs dizaines de dB, et sont très rapides. Le contrôle, ou régulation, de la puissance d'émission du signal par la station émettrice se limite donc à corriger l'atténuation moyenne du canal.

Un autre procédé de la technique antérieure est décrit dans la demande de brevet GB-A-2 268 365. Selon ce procédé, il est prévu que la régulation de la puissance d'un signal à émettre par une station soit réalisée en fonction de la puissance du signal reçue par cette station, en considérant comme symmétriques les canaux aller et retour. Cette hypothèse apparaît néanmoins d'autant plus erronée que les fréquences respectives des canaux aller et retour sont espacées.

Un procédé connu, dit à "boucle fermée", de contrôle de puissance d'un signal émis par une station émettrice, utilise le principe suivant. La station réceptrice mesure un niveau du rapport signal à bruit dans le signal reçu en provenance de la station émettrice. Ce rapport signal à bruit mesuré est émis sous forme de message par la station réceptrice vers la station émettrice. Cette dernière corrige le niveau de puissance du signal émis en fonction de cette mesure effectuée par la station réceptrice. L'application de ce procédé aux réseaux par satellite principalement utilisés jusqu'à ce jour, à savoir des réseaux utilisant des satellites en orbite géostationnaire situés à une distance d'environ 38000 km du sol terrestre, ne paraît présenter qu'un intérêt limité. En effet, dans un tel réseau, le délai de propagation aller-retour d'un signal entre les stations émettrice et réceptrice est sensiblement égal, à des temps de traitement près, au délai de réaction de régulation de puissance qui sépare un instant d'émission de données par la station émettrice d'un instant suivant de correction de la puissance d'émission de ces données sur la base d'une mesure du signal d'émission reçu. Pour un satellite situé à environ 38000 kilomètres, le délai de réaction de correction de puissance est environ égal à 500 ms, ce qui limite dans l'absolu la correction possible des variations des composantes du signal aux seules fréquences inférieures à 1/0,5 = 2 Hz. Dans la pratique, compte tenu des limitations induites par le système, il peut être considéré que cette plage est limitée par la borne supérieure 1 Hz.

La technique antérieure ne fournit donc pas de procédé efficace de contrôle de puissance mettant en oeuvre un procédé du type "à boucle fermée". Un premier objectif de l'invention est donc de fournir un tel procédé particulièrement adapté au réseau de radiocommunications par satellite non-géostationnaire en orbite basse. Le procédé reste néanmoins applicable aux réseaux à satellite à orbite circulaire intermédiaire ou orbite géostationnaire et aux réseaux terrestres. Un autre objectif de l'invention est de fournir un ensemble de deux stations pour la mise en oeuvre du procédé de l'invention.

A cette fin, un procédé de régulation d'une puissance d'un premier signal qui est émis par une première station pour être reçu sous la forme d'un second signal par une seconde station, ledit procédé étant du type à boucle fermée, est caractérisé selon l'invention en ce qu'il comprend les étapes de :
- prédiction, à un instant donné, en fonction du second signal qui est reçu par la seconde station, d'une valeur représentative d'un rapport signal à bruit dans ledit second signal à un instant ultérieur, et
- régulation, dans ladite première station, à un instant intermédiaire succédant à l'instant donné et précédant ledit instant ultérieur d'une durée sensiblement égale à la durée de propagation entre première et seconde stations, de ladite puissance du premier signal en fonction de ladite valeur prédite.

Selon une réalisation, l'étape de prédiction comprend les sous-étapes de:
- mesure par la seconde station, préalablement audit instant donné, d'une pluralité de niveaux de puissance du second signal,
- évaluation d'une valeur représentative d'un rapport signal à bruit dans ledit second signal respectivement pour chacun de ladite pluralité de niveaux de puissance mesurés du second signal, et
- extrapolation de ladite valeur prédite en fonction desdites valeurs représentatives évaluées.

Typiquement, la mesure par la seconde station du dernier de ladite pluralité de niveaux de puissance du second signal nécessaire à ladite extrapolation, précède ledit instant ultérieur d'une durée sensiblement égale à la durée de propagation aller-retour entre première et seconde stations.

Le procédé peut inclure en outre l'étape de :
- mesure d'un niveau moyen de qualité dudit second signal reçu par ladite seconde station sur une durée relativement longue expirant audit instant donné. Dans ce cas, la régulation de puissance du premier signal, en fonction de ladite valeur prédite, s'applique à l'instant intermédiaire en dépendance d'une variation requise de la valeur représentative du rapport signal à bruit prédit, cette variation requise étant fonction de la différence entre le niveau moyen de qualité mesuré et un niveau de qualité de référence.

L'invention fournit également un ensemble de première station et seconde station pour la mise en oeuvre du procédé.

Selon une première variante, la première station comprend:
- des moyens pour réguler la puissance du premier signal émis en fonction de ladite valeur prédite; et la seconde station comprend:
- des moyens pour mesurer une pluralité de niveaux de puissance du second signal;
- des moyens pour évaluer une valeur représentative d'un rapport signal à bruit dans ledit second signal respectivement pour chacun de ladite pluralité de niveaux évalués de puissance du second signal. Par ailleurs, l'ensemble comprend dans l'une quelconque desdites deux stations:
- des moyens pour extrapoler ladite valeur prédite en fonction desdites valeurs représentatives évaluées.

Selon une seconde variante, la seconde station inclut, en outre, des moyens pour mesurer un niveau moyen de qualité dudit second signal reçu par ladite seconde station sur une durée relativement longue expirant audit instant donné, et l'ensemble comprend, en outre, dans l'une quelconque desdites stations des moyens pour ajuster la régulation de puissance du premier signal en dépendance d'une variation requise de la valeur représentative de rapport signal à bruit prédite, cette variation requise étant fonction de la différence entre le niveau moyen de qualité mesuré et un niveau de qualité de référence.

D'autres caractéristiques et avantages de la présente invention apparaîtront plus clairement à la lecture de la description suivante, en référence aux dessins annexés correspondants, dans lesquels :
- la figure 1 représente schématiquement un réseau par satellite dans lequel est établie une liaison entre deux stations;
- la figure 2 est un diagramme temporel de propagation de signaux émis entre les deux stations de la figure 1;
- la figure 3 montre, sous la forme de bloc-diagramme, les deux stations de la figure 1 pour la mise en oeuvre d'une première variante du procédé de l'invention; et
- la figure 4 montre, sous la forme de bloc-diagramme, les deux stations de la figure 1 pour la mise en oeuvre d'une seconde variante du procédé de l'invention.

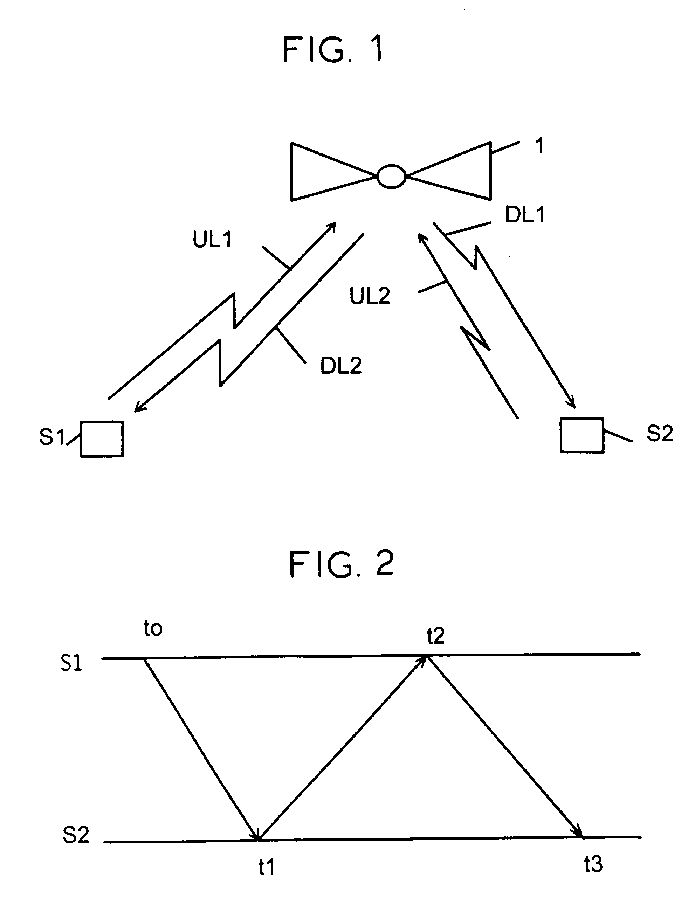

L'invention est décrite ici dans le cadre d'un réseau par satellite bien qu'elle puisse s'appliquer à un réseau terrestre entre une station de base et un terminal. En référence à la figure 1, un réseau par satellite se définit par une pluralité de stations, sous la forme de stations de connexion ou de mobiles portatifs ou autres, entres lesquels sont établies des liaisons de transmission via un satellite 1. Dans cette figure 1, il est supposé qu'il existe une liaison entre la station S1, dite station émettrice, et la station S2, dite station réceptrice. La station S1 émet vers la station S2 à travers, d'une part, une liaison montante UL1 de la station S1 vers le satellite 1 et, d'autre part, une liaison descendante DL1 du satellite 1 vers la station S2. Parallèlement, la station S2 émet vers la station S1 à travers, d'une part, une liaison montante UL2 de la station S2 vers le satellite 1 et, d'autre part, une liaison descendante DL2 du satellite 1 vers la station S1. La durée de propagation entre les stations S1 et S2 est égale à la somme de la durée de propagation entre la station S1 et le satellite 1 d'une part, et la durée de propagation entre le satellite 1 et la station S2 d'autre part. A titre d'exemple, pour un satellite à basse altitude, par exemple à 1410 km, dont l'élévation varie entre 10° et 90°, la durée de propagation entre les stations S1 et S2 varie entre 19 ms et 46 ms en fonction de la position du satellite.

Un avantage important résulte de la mise en oeuvre de l'invention dans un réseau par satellite à basse altitude. La relative faible durée de propagation d'un signal entre les stations S1 et S2 induit un faible délai de réaction de correction de puissance par un procédé de type à boucle fermée. Pour des délais de correction pouvant s'étaler entre 19 ms et 46 ms, les limites théoriques d'efficacité de la correction de puissance sont définies par les deux fréquences de variation des composantes de bruit ou de signal respectivement égales à 1/0,019 = 52,6 Hz et 1/0,046 = 21,7 Hz. En pratique, il doit être constaté que le procédé ne s'avère efficace que jusqu'à 30% de ces valeurs limites théoriques, c'est à dire pour des fluctuations des composantes du signal qui sont inférieures à 52.0,3 ≅ 16 Hz et 21.0,3 ≅ 6,5 Hz.

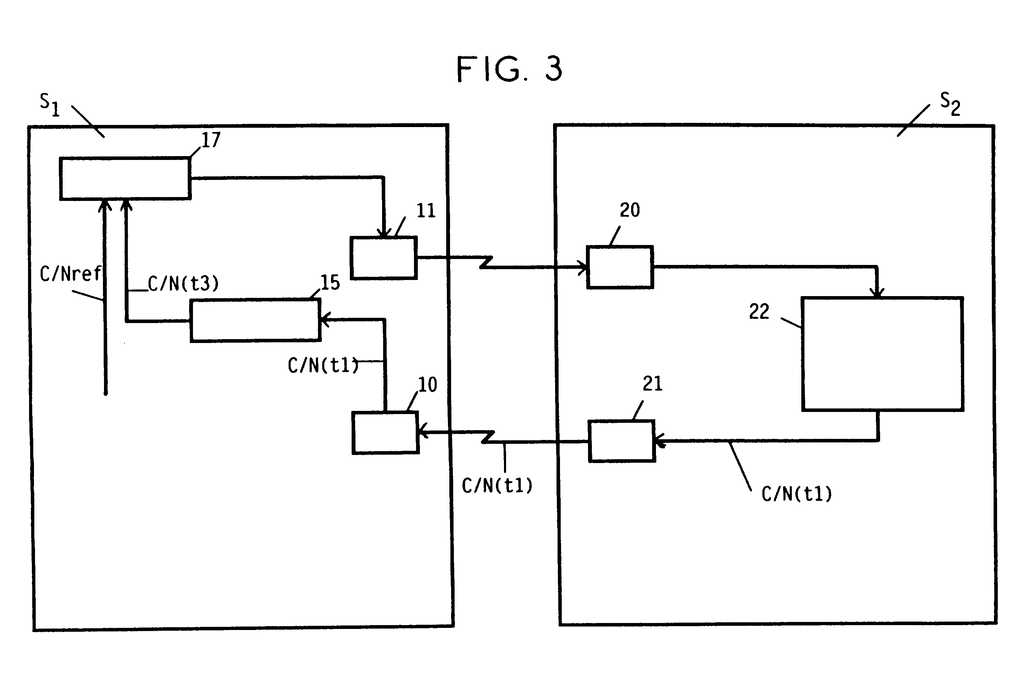

En référence aux figures 2 et 3, la description qui suit du procédé selon l'invention considère seulement la correction de la puissance du signal émis par la station S1, dite station émettrice. Il peut néanmoins être envisagé de dupliquer un tel procédé pour obtenir une correction de la puissance à la fois du signal émis par la station S1 et du signal émis par la station S2. En référence à la figure 3, la station émettrice S1 comprend, pour la mise en oeuvre de la première variante du procédé selon l'invention, un récepteur 10, un émetteur 11, une unité de prédiction 15 et une unité 17 de régulation de la puissance émise par l'émetteur 11. La station S2, dite réceptrice, comprend un récepteur 20, un émetteur 21 et une unité de mesure et évaluation 22.

Dans la station S1, la sortie du récepteur 10 est appliquée à une entrée de l'unité de prédiction 15 dont une sortie est reliée à une première entrée de l'unité de régulation 17. Une seconde entrée de l'unité de régulation 17 reçoit un niveau de référence de rapport signal à bruit C/Nref. Une sortie de l'unité de régulation 17 s'applique à une entrée de commande de l'émetteur 11.

Dans la station S2, une sortie du récepteur 20 est reliée à une entrée de l'émetteur à travers l'unité de mesure 22.

Le procédé selon l'invention va maintenant être décrit, en se référant ponctuellement à la figure 2, relativement à des instants déterminants pour la compréhension de l'invention, mais il va de soi que dans la pratique le procédé s'applique continûment dans le temps pour assurer une régulation continue de la puissance émise par l'émetteur 11.

A l'instant t0, l'émetteur 11 de la station S1 émet un signal avec une puissance donnée. Ce signal est reçu par l'émetteur 20 dans la station S2 à l'instant t1, avec un retard (t1-t0). Il est supposé que le signal transmis par l'émetteur 11 est un signal à étalement de spectre à séquence directe. Il s'agit d'un signal résultant de la modulation d'un signal de données à transmettre à deux états "+1" et "-1" par une séquence pseudo-aléatoire. Cette technique permet d'étaler la largeur de bande du signal transmis sur toute la largeur de bande de canal disponible. La séquence pseudo-aléatoire joue le rôle d'une porteuse de modulation dont la phase est déphasée pseudo-aléatoirement à une fréquence maximale donnée F. T=1/F définit la durée élémentaire d'une impulsion rectangulaire, dite "chip", de la séquence pseudo-aléatoire. Cette durée T est appelée durée de "chip".

En pratique, lors d'une phase de synchronisation entre les stations S1 et S2, la séquence pseudo-aléatoire est émise non modulée de sorte que la station S2 puisse se synchroniser sur cette séquence pseudo-aléatoire pour permettre une démodulation du signal modulé ultérieurement reçu lors d'une phase de transmission. Par connaissance de cette séquence pseudo-aléatoire, le récepteur 20 démodule le signal reçu en un signal de données reçu. Ce signal de données reçu est appliqué à une entrée de l'unité de mesure 22. Cette dernière inclut un filtre passe-bas par exemple à 100 Hz rejetant les composantes de bruit basse fréquence dans le signal de données reçu. En sortie de ce filtre passe-bas est donc mesurée approximativement la composante de signal utile C(t1) du signal reçu à l'instant t1, la composante de bruit basse fréquence étant rejetée par le filtre. A partir de cette composante de signal utile C(t1) du signal reçu, l'unité 22 établit, par soustraction de cette composante C(t1) au signal reçu, la composante de bruit N(t1) dans le signal reçu à l'instant t1. Il est à noter que ces mesures de composante de signal C(tl) et composante de bruit N(t1) par l'unité 22 peuvent être remplacées par des mesures de deux valeurs quelconques respectivement représentatives des puissances de signal utile et de signal de bruit. L'unité 22 est donc en mesure d'évaluer le rapport signal à bruit C/N(t1) dans le signal reçu à l'instant t1 par division des composantes C(t1) et N(t1).

Cette valeur évaluée du rapport signal à bruit est émise sous forme de message vers la station S1 à travers l'émetteur 21. Le récepteur 10 de la station S1 reçoit ce message à l'instant t2 (figure 2), avec un décalage (t2 - t1) par rapport à l'instant t1 d'émission de ce message par la station S2. La valeur évaluée du rapport signal à bruit C/N(t1) est alors transmise à l'unité de prédiction 15. Cette unité 15 a déjà préalablement reçu une pluralité P de valeurs évaluées de rapport signal à bruit du signal reçu par la station S2, pour des instants successifs respectifs tp, t(p+1), t(p+2), etc... précédant l'instant t1. Ces valeurs évaluées successives du rapport signal à bruit résultent, comme pour C/N(t1), de mesures par la station S2, auxdits instants préalables à l'instant t1, d'une pluralité de niveaux de puissance du second signal, et d'une évaluation d'une valeur de rapport signal à bruit dans le signal reçu par S2 respectivement pour chacun de cette pluralité P de niveaux de puissance mesurés du second signal. Cela résulte du caractère itératif du procédé de l'invention qui offre une régulation continue de la puissance émise par la station S1.

L'unité de prédiction 15 a pour fonction de prédire par extrapolation une valeur de rapport signal à bruit, noté C/N(t3), à un instant t3 qui coïncide, comme montré sur la figure 2, avec l'instant de réception par la station S2 d'un signal émis par la station S1 à l'instant t2.

Ainsi, à l'instant t2, la station S1 est en possession de la valeur de rapport signal à bruit prédite C/N(t3) et est à même de réguler, en fonction de cette valeur C/N(t3), la puissance du signal émis par S1 à cet instant t2 de sorte à influencer la valeur de rapport signal à bruit dans le signal reçu par la station S2 à l'instant t3. Ainsi par prédiction d'une valeur de rapport signal à bruit du signal reçu par S2 à l'instant t3 et compte tenu du temps de propagation entre les stations S1 et S2, il est donc possible de réguler à l'instant t2 la puissance émise par l'émetteur 11 pour modifier avantageusement la valeur de rapport signal à bruit du signal qui sera effectivement reçu par la station S2 à l'instant t3. Pour cela, il apparaît particulièrement avantageux que la mesure par la station S2 du dernier de la pluralité de niveaux de puissance nécessaires à l'extrapolation précède l'instant t3 d'une durée sensiblement égale à la durée de propagation aller-retour entre stations S1 et S2. Ainsi, est obtenue une valeur de rapport signal à bruit prédite C/N(t3) du signal reçu par S2 à l'instant t3 résultant d'une extrapolation optimale, sachant que la durée de propagation aller-retour entre les deux stations S1 et S2 ne peut être réduite. Cela résulte du principe évident qu'une extrapolation est d'autant plus efficace qu'elle est faite à plus brève échéance.

En pratique, l'unité de prédiction est par exemple sous la forme d'une unité de traitement qui réalise un développement en série de Taylor d'ordre 2 pour prédire C/N(t3) en fonction de la pluralité P de valeurs de rapport signal à bruit mesurées et de la durée (t3 - t1) de propagation aller-retour entre les stations S1 et S2. Plus généralement, cette unité de traitement peut être sous la forme d'un filtre adaptatif.

Dans cette première variante de l'invention, la puissance du signal émis est corrigée à l'instant t2 en fonction de la valeur de rapport signal à bruit prédite C/N(t3) et de la valeur de rapport signal à bruit de référence C/Nref. La puissance émise à l'instant t2 par l'émetteur 11 de la station S1 est régulée de sorte que le rapport signal à bruit du signal qui sera effectivement reçu à l'instant t3 par le récepteur 20 de la station S2 soit le plus proche possible de la valeur C/Nref. Ainsi si C/N(t3) est supérieur à C/Nref, la puissance d'émission est diminuée. Inversement, si C/N(t3) est inférieur à C/Nref, la puissance d'émission est augmentée.

Il est à noter que l'unité de prédiction 15 pourrait être incluse dans la station réceptrice S2, auquel cas les informations transmises par la station S2 vers la station S1 ne consisteraient pas en des valeurs de rapport signal à bruit évalués C/N(t1) mais en des valeurs de rapport signal à bruit prédites C/N(t3).

Le résultat obtenu par l'invention est l'augmentation de la qualité de la liaison de transmission de données entre les deux stations S1 et S2, la diminution de la puissance transmise par chaque terminal et donc l'augmentation de la capacité du système. Dans la variante de la figure 3, il est pour cela fait l'hypothèse que cette qualité est directement liée au rapport signal à bruit. Cette considération ne s'avère pas complètement exacte car en pratique la qualité est associée au rapport signal à bruit en fonction de la nature du canal de liaison, en termes de bruit Or, ce canal de liaison possède des caractéristiques variables.

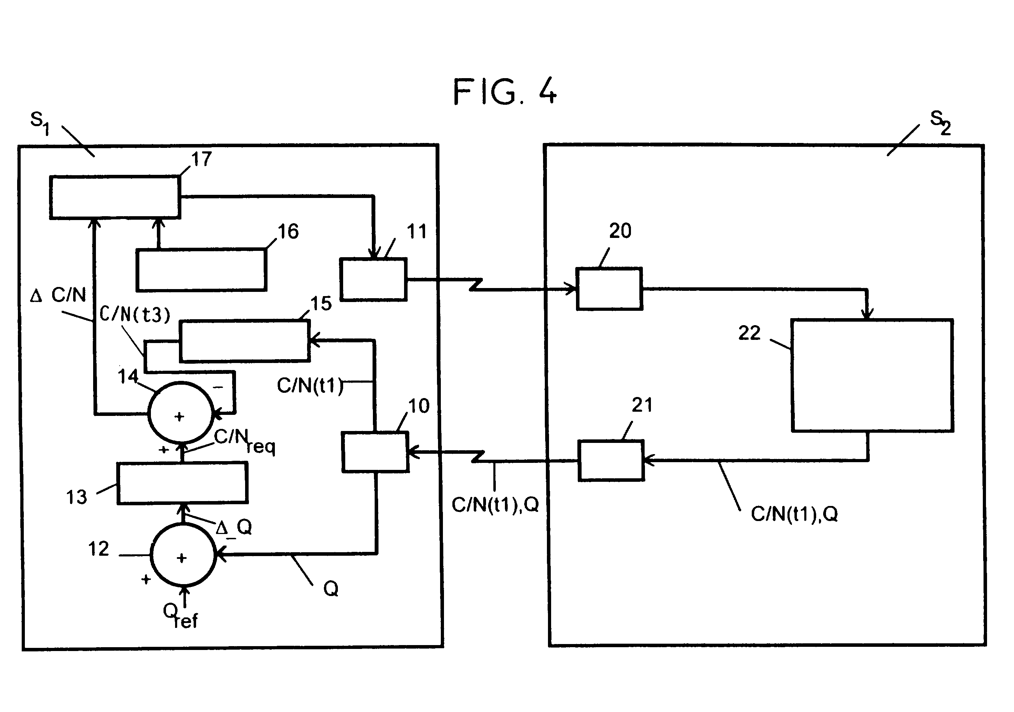

Dans la seconde variante de l'invention illustrée dans la figure 4, ce point est pris en compte pour améliorer le procédé de la première variante. Comme montrée dans cette figure, les émetteur 11, récepteur 10, unité de prédiction 15 et unité de régulation 17 dans la station S1 ainsi que les récepteur 20, émetteur 21 et unité de mesure 22 dans la station 22 sont agencés de la même manière que dans la figure 3.

Pour cette seconde variante, la station S1 inclut, en outre, un premier soustracteur 12, une unité de traitement 13, un second soustracteur 14 et, éventuellement, une unité de gestion des ressources 16. Une seconde sortie du récepteur 10 est appliquée à une première entrée du soustracteur 12 dont une seconde entrée reçoit un niveau de qualité de référence Qref. La sortie du soustracteur 12 est appliquée à une entrée de l'unité de traitement 13 dont une sortie est reliée à une première entrée du soustracteur 14. Le soustracteur 14 reçoit sur une seconde entrée la sortie de l'unité de prédiction 15, également appliquée à l'une de trois entrées de l'unité de régulation 17. Une seconde de ces trois entrées reçoit la sortie du soustracteur 14 et la troisième de ces entrées est connectée à la sortie de l'unité de gestion de ressources 16.

Le mise en oeuvre du procédé selon cette variante est la suivante. A partir du signal reçu en provenance de la station S1, l'unité de mesure et d'évaluation 22 incluse dans la station S2, évalue comme dans la variante précédente, des valeurs de rapport signal à bruit C/N(t1) à partir de niveaux de puissance mesurés du signal reçu. En outre, pour la mise en oeuvre de cette seconde variante, l'unité 22 mesure un niveau moyen de qualité Q du signal reçu par la station S sur une durée relativement longue. Avantageusement, en prenant pour référence l'instant t1 comme instant d'évaluation, avant émission, de la valeur de rapport signal à bruit prédite C/N(t1), la durée relativement longue expire à cet instant t1. Une valeur de rapport signal à bruit évaluée C/N(t1) et un niveau moyen de qualité Q sont alors transmis, sous forme de message, sensiblement à l'instant t1, par la station S2 vers la station S1. L'unité de prédiction 15 délivre en réponse à la réception de la valeur C/N(t1), la valeur de rapport signal à bruit prédite C/N(t3). Le niveau moyen de qualité Q est soustrait, dans le soustracteur 12, au niveau de qualité de référence Qref. Le soustracteur 12 délivre, en sortie, une valeur de différence de qualité deltaQ appliquée à une entrée de l'unité de traitement 13. Cette dernière établit une valeur de rapport signal à bruit requise C/Nreq en fonction de la valeur de différence de qualité deltaQ.

L'unité 13 a ainsi pour fonction d'asservir le niveau Q, cycliquement mesuré, au niveau de qualité de référence Qref. Ainsi, si la valeur de différence de qualité est supérieure à 0, l'unité de traitement 13 diminue la valeur courante de C/Nreq. Inversement, si la valeur de différence de qualité est inférieure à 0, l'unité augmente la valeur courante de C/Nreq. L'aspect fluctuant des caractéristiques du canal de transmission est ainsi pris en compte. La valeur de rapport signal à bruit prédite C/N(t3) est soustraite de cette valeur de rapport signal à bruit requise C/Nreq pour produire une information de variation requise de rapport signal à bruit delta C/N. L'unité de régulation 17 régule la puissance du signal émis à l'instant t2 (figure 2) par l'émetteur 11 en fonction de la valeur prédite C/N(t3) et en dépendance de la variation requise deltaC/N de cette valeur de rapport signal à bruit prédite (C/N(t3)). La variation requise de la valeur de rapport signal à bruit prédite est fonction de la différence entre le niveau moyen de qualité mesuré Q et le niveau de qualité de référence Qref. Il est à noter que les moyens 12, 13 et 14 propres à cette variante peuvent être inclus ou bien dans la station S1 ou bien dans la station S2, notamment selon que l'unité de prédiction 15 appartient à la station S1 ou à la station S2.

La fonction de l'unité de gestion des ressources 16 est de fournir à l'unité de régulation 17 des informations relatives à l'établissement et la fermeture des canaux de transmission. L'unité de régulation 17 prend ainsi en compte a priori les effets induits sur un canal par les autres canaux nouvellement établis ou fermés, pour établir la commande de la puissance d'émission.

## Revendications

1. Procédé de régulation d'une puissance d'un premier signal qui est émis par une première station (S1) pour être reçu sous la forme d'un second signal par une seconde station (S2), procédé du type à boucle fermée, caractérisé en ce qu'il comprend les étapes de :
- prédiction (15) à un instant donné (t1, t2), en fonction dudit seond signal qui est reçu par la seconde station, d'une valeur représentative d'un rapport signal à bruit (C/N(t3)) dans ledit second signal à un instant ultérieur (t3), et
- régulation (17), dans ladite première station (S1), à un instant intermédiaire (t2) succédant à l'instant donné (t1) et précédant ledit instant ultérieur (t3) d'une durée sensiblement égale à la durée de propagation (t2-t1) entre première (S1) et seconde (S2) stations, de ladite puissance du premier signal en fonction de ladite valeur prédite (C/N(t3)).

2. Procédé conforme à la revendication 1, caractérisé en ce que ladite étape de prédiction comprend les sous-étapes de:
- mesure par la seconde station (S2), préalablement audit instant donné (t1), d'une pluralité de niveaux de puissance du second signal,
- évaluation d'une valeur représentative d'un rapport signal à bruit dans ledit second signal respectivement pour chacun de ladite pluralité de niveaux de puissance mesurés du second signal, et
- extrapolation de ladite valeur prédite en fonction desdites valeurs représentatives évaluées.

3. Procédé conforme à la revendication 2, caractérisé en ce que la mesure, par la seconde station (S2), du dernier de ladite pluralité de niveaux de puissance du second signal nécessaire à ladite extrapolation, précède ledit instant ultérieur (t3) d'une durée sensiblement égale à la durée de propagation aller-retour (t3-t1) entre première et seconde stations (S1, S2).

4. Procédé conforme à l'une quelconque des revendications précédentes, caractérisé en ce qu'il comprend en outre l'étape de :
- mesure (22) d'un niveau moyen de qualité (Q) dudit second signal reçu par ladite seconde station (S2) sur une durée relativement longue expirant audit instant donné (t1), et en ce que
la régulation (17) de puissance du premier signal, en fonction de ladite valeur prédite, s'applique à l'instant intermédiaire en dépendance d'une variation requise de la valeur représentative du rapport signal à bruit prédit (C/N(t3)), cette variation requise étant fonction de la différence entre le niveau moyen de qualité mesuré (Q) et un niveau de qualité de référence (Qref).

5. Ensemble de première station (S1) et seconde station (52) pour la mise en oeuvre du procédé conforme à la revendication 2 ou 3, caractérisé en ce que
ladite première station (S1) comprend:
des moyens (17) pour réguler la puissance du premier signal émis en fonction de ladite valeur prédite (C/N(t3)); ladite seconde station (S2) comprend ;
des moyens (22) pour mesurer une pluralité de niveaux de puissance du second signal; et
des moyens (22) pour évaluer une valeur représentative d'un rapport signal à bruit dans ledit second signal respectivement pour chacun de ladite pluralité de niveaux évalués de puissance du second signal; et en ce que l'ensemble comprend dans l'une quelconque desdites deux stations:
des moyens (15) pour extrapoler ladite valeur prédite en fonction desdites valeurs représentatives évaluées.

6. Ensemble conforme à la revendication 5 pour la mise en oeuvre du procédé conforme à la revendication 4, caractérisé en ce que ladite seconde station (S2) inclut, en outre,
des moyens (22) pour mesurer un niveau moyen de qualité (Q) dudit second signal reçu par ladite seconde station (S2) sur une durée relativement longue expirant audit instant donné (t1), et en ce que
ledit ensemble comprend, en outre, dans l'une quelconque desdites stations des moyens (12, 13, 14) pour ajuster la régulation (17) de puissance du premier signal en dépendance d'une variation requise (deltaQ) de la valeur représentative de rapport signal à bruit prédite (C/N(t3)), cette variation requise étant fonction de la différence entre le niveau moyen de qualité mesuré (Q) et un niveau de qualité de référence (Qref).

7. Ensemble de première station (S1) et seconde station (S2) pour la mise en oeuvre du procédé conforme à la revendication 2 ou 3, caractérisé en ce que
ladite première station (S1) comprend:
des moyens (17) pour réguler la puissance du premier signal émis en fonction de ladite valeur prédite (C/N(t3)); ladite seconde station (S2) comprend ;
des moyens (22) pour mesurer une pluralité de niveaux de puissance du second signal; et
des moyens pour transmettre à destination de ladite première station ladite pluralité de niveaux de puissance du second signal
ladite première station (S1) comprenant, en outre:
des moyens (22) pour évaluer une valeur représentative d'un rapport signal à bruit dans ledit second signal respectivement pour chacun de ladite pluralité de niveaux évalués de puissance du second signal; et
des moyens (15) pour extrapoler ladite valeur prédite en fonction desdites valeurs représentatives évaluées.

8. Ensemble conforme à la revendication 7 pour la mise en oeuvre du procédé conforme à la revendication 4, caractérisé en ce que ladite seconde station (S2) inclut, en outre,
des moyens (22) pour mesurer un niveau moyen de qualité (Q) dudit second signal reçu par ladite seconde station (S2) sur une durée relativement longue expirant audit instant donné (t1), et en ce que
ledit ensemble comprend, en outre, dans l'une quelconque desdites stations des moyens (12, 13, 14) pour ajuster la régulation (17) de puissance du premier signal en dépendance d'une variation requise (deltaQ) de la valeur représentative de rapport signal à bruit prédite (C/N(t3)), cette variation requise étant fonction de la différence entre le niveau moyen de qualité mesuré (Q) et un niveau de qualité de référence (Qref).
